# EUROPEAN PATENT APPLICATION

(11) **EP 1 788 005 A2**
(43) Date of publication of application: **23.05.2007**
(21) Application number: 06291747.1
(22) Date of filing: 10.11.2006
(51) Int. Cl.: C08F 10/02, C08F 2/00, C08F 2/14

(54) **Anti-static composition useful for the polymerization or copolymerization of olefins in suspension, process of polymerization or copolymerization of olefins in suspension, and olefin polymer or copolymer**

(30) Priority: 10.11.2005 BR PI0506110
(71) Applicant: Braskem S.A., 42810-000 Camaçari, BA (BR)
(72) Inventor: Kunrath, Fábio André, City of Nova Santa Rita (BR); Kardec do Nascimento, Alan, City of Porto Alegre (BR); Fernandes de Matos, Valter, City of Salvador (BR)
(74) Representative: Vieillefosse, Jean-Claude

(57) **Abstract**

The present invention is referred to an anti-static composition, obtained from the combination of two anti-static agents, and to its application in a process of polymerization or copolymerization of olefins in suspension.

## Description

### TECHNICAL FIELD

The present invention is referred to an anti-static composition, obtained from the combination of two anti-static agents, and to its application in a process of polymerization or copolymerization of olefins in suspension.

### BACKGROUND OF THE INVENTION

The polymerization of olefins in low pressure processes, promoted by supported Phillips or Ziegler-Natta catalysts, has been described several times in the literature, and is, nowadays, widely employed in industrial scale.

These supported catalysts are solid compounds. The catalysts of the type Ziegler-Natta comprise an inorganic support, more specifically a magnesium dihalide or silica in active form, and one titanium compound containing at least one Ti-halogen bond. More improved forms also use an internal electron-donor compound. The catalytic composition also comprises a cocatalyst, i.e., an activator of the external catalyst and optionally an external electron-donor compound. The catalysts of the type Phillips are those based on chromium (VI) oxide supported on silica and thermally activated in a non-reducing atmosphere.

Among the most used processes, polymerization in suspension and polymerization in gas-phase are the most remarkable. In the processes of polymerization in gas-phase, the monomer, in conjunction with an inert compound, among which the nitrogen and the propane are noteworthy, acts simultaneously as reactant and as circulation and cooling agent of the reaction mixture. Examples of those polymerization processes are described in the patents US 4 012 573, US 4 427 573, EP-A 110 087, EP-A 230 019 and EP-A 260 647.

Processes in suspension may be performed with the use of one or more reactors, preferably in a continuous way, or in a less adequate manner, in batches.

For the suspension of the polymer, inert saturated aliphatic solvents may be used, whereas the polymerization in suspension is called as slurry process, or the means of suspension may be the monomer itself, like, for example, liquefied propene, whereas the polymerization in suspension is called as bulk process. The polymerization stage may be or may be not preceded of a pre-polymerization stage of the catalytic system, in accordance with the needs of different processes or the properties aimed for the final resin.

In processes in suspension, the components of the catalytic mixture, monomers and molecular weight controllers are injected into the reactors, which operate flooded, under stirring, with the reaction solvent. The heat of the reaction is removed through the water that circulates in the reactor jackets and passes through heat exchangers. After the reaction time, the polymer/solvent mixture is separated in a centrifugal device and the solvent is recycled to the beginning of the process.

During homopolymerization or copolymerization reaction of the ethylene and alpha-olefins, it is frequently observed the agglomeration of polymer particles in reactor's internal walls, stirrers and heat exchangers, in the form of deposits, due to the development of electrostatic charges, as result of the friction between the moving particles of the polymer. Electrostatic charges are also generated due to the collision of the polymer particles against the metallic parts of the reactor. This phenomenon can be easily observed also whenever polymers are handled in its powder form. If the electrostatic charges are formed in the vicinity of the reactor walls, a tendency for the adhesion of particles to the walls occurs, forming a polymer layer, which is undesirable, because it negatively influence the thermal exchange of the system, thus affecting process continuity. If part of this polymer, adhered to the reactor walls or stirrer, is totally or partially removed and mixed to the polymer suspension, a decrease of resin quality occurs due to the appearance of the so called gels or "fish-eyes". Electrostatic charges can also induce the formation of polymer agglomerates, called clots or "potatoes", in the kernel of the reaction mixture. These agglomerates can lead to operational discontinuity, if is reached a size such that they can cause the obstruction of valves and piping. These deposits and agglomerates can grow in such a way to difficult or completely block the passage of the reaction mixture, causing system shutdown for maintenance and cleaning.

Due to the facts noted above, several different ways of controlling and prevent the formation of these polymer agglomerates have been described in the specialized literature. The anti-static additives can be composed of the most varying types, that have as function to prevent the formation of electrostatic charges. Ideal compounds for this purpose are, for example, salts of saturated fatty acids with the general formula RCOOM where R is a saturated aliphatic carbon chain from C12 to C22 and M is a metal from the family of alkali metals or alkaline earth metals. Sulphonated derivatives of esters or of primary or secondary alcohols, with the general formula ROSO₃M or RR'CHSO₃M, where the description of R' is the same as R, among others. One adequate reference to the anti-static compounds, which are also appropriate to the use in the polymerization and copolymerization of the ethylene, propylene and of alpha-olefins, and in accordance with this invention, can be found in the publication from EP-A1-0 107 127, pages 6 to 10.

The patents EP-A-0 005 215 and US 5 194 256 describe the use of an anti-static composition with the intent of decreasing the tendency of polymer particles to form agglomerates. The anti-static composition comprises a polysulphone and a polymeric polyamine. This particular anti-static composition is the product STADIS 450®.

The references US 5.410.002, US 6.743.871 B2, US 2003/0176604 A1 and WO09611961A1 describe the use of N-alkyl ethanolamines or quaternary amine salts of fatty acids, having from 12 to 22 carbon atoms in its backbone, with the function of preventing the formation of polymer layers or agglomerates. These, however, present an intrinsically poor dissipative action over the electrostatic charges formed, requiring, therefore, high dosages to propitiate the desired effect, with accentuated effect over the catalytic system activity. Particularly, compositions presenting this type of compound as majority components are commercialized by ICI with the trademark ATMER®, and specially, the composition is the product ATMER® 163, commercialized by Chemax Polymer Additives with the trademarks Chemstat® and CHEMAX®, and specifically the compositions are the products Chemstat® 122 and CHEMAX® X-997.

The patents US 5.414.064 and EP-0-232 701 B2 describe the use of an anti-static composition for the homopolymerization or copolymerization of the ethylene with alpha-olefins, constituted by a blend of less than 1% of chromium anthranilate, 25 to 30% of a calcium salt of the medialanic acid (calcium N-oleoyl-sarcosine) and 5% of di-tert-butylphenol. The composition, specifically, is the product Kerostat CE 5009®. The anti-static composition prevents the formation of clots and agglomerates inside the reactors, however, as clearly shown in the subsequent patents EP-A-362629 and EP-A-364759, the resulting polymers generally present low bulk density and the films obtained from these present contaminants in the form of non-incorporated particles (gels or "fish-eyes").

In agreement with the depicted above, none of the compositions aforementioned presents a definitive solution to problems of operational stability and product quality, which appears on the process of polymerization of olefins in suspension. The addition of anti-static agents to the reaction medium must comprise both, the increase in the electrical conductivity of the medium and the prevention of electrostatic charges formation, and, in this way, reducing the tendency of particles to migrate to the walls of the reactor and heat exchangers, as well as the consequent formation of agglomerates and deposits. Nevertheless, the activity of catalytic system must not be negatively impacted. It is well known that a reduced quantity of anti-static agent in the system does not produce the desired result, failing to prevent the formation of particle agglomerates, while large quantities may induce the generation of polymers that show an adhesive nature, hard to handle, besides harming the activity of catalytic system.

Surprisingly, the use of a combination of anti-static compositions showed to perfectly fulfill the operational needs of the process, regarding stability, considering the reduced dosage required, without shutdowns to opening the reactors for the removal of deposits of polymer particles, without negatively impacting the activity of the catalytic system and with excellent properties of the obtained polymers.

Openly available literature does not describe or suggest the object described and claimed in the present request, because it is not shown an anti-static composition obtained from synergistic compositions containing a combination of anti-static agents, formed by one fatty acid sarcosinate and one poly-oxyethyl-alkyl amine, which characteristics are optimized as a function of dissipation and prevention against the appearance of electrostatic charges formed during the homopolymerization and copolymerization of the ethylene and alpha-olefins.

### SUMMARY OF THE INVENTION

The present invention comprises the attainment of an improved anti-static composition, formed by the combination of a majority anti-static agent comprising at least one fatty acid sarcosinate and one minority anti-static agent comprising at least one poly-oxyethyl-alkyl, and its application to the polymerization or copolymerization in suspension of the ethylene or alpha-olefins where the resultant polymer shows extremely low adherence to the walls of the reactor, stirrers and heat exchangers, thus allowing for a long time of continuous operability of the system, while keeping a high productivity and stable operational conditions.

The improved composition of anti-static components, in accordance with the present invention, particularly comprises the following components:
a) one majority anti-static agent containing, in larger quantities, at least one alkalimetal salt or alkaline-earth metal salt derived from the N-oleoyl-sarcosine and, optionally, in smaller quantity, at least one alkalimetal salt or alkaline-earth metal salt derived from other sarcosines presenting saturated or unsaturated carbon chains containing from 6 to 22 carbon atoms in the backbone;
b) one minority anti-static agent comprising at least one poly-oxyethyl-alkyl amine.

Therefore, the present invention provides an improved composition of a majority anti-static agent derived from a fatty acid sarcosinate with a minority anti-static agent comprising at least one poly-oxyethyl-alkyl amine, aiming to improve the polymerization or copolymerization process of the ethylene or alpha-olefins, improving the thermal exchange of the reactors and heat exchangers and increasing the time between plant shutdowns for system cleaning and maintenance.

The present invention provides, additionally, an improved composition used for the prevention and dissipation of electrostatic charges formed during the process of polymerization and copolymerization of the ethylene and alpha-olefins, where the activity of the catalytic system, employed in the polymerization reaction, is unharmed.

The present invention also provides an improved composition used for the prevention and dissipation of electrostatic charges formed during the process of polymerization and copolymerization of the ethylene and alpha-olefins, where the consumption of activators and compounds of alkyl aluminum is substantially reduced.

The present invention still provides an improved composition used for the prevention and dissipation of electrostatic charges formed during the process of polymerization and copolymerization of the ethylene and alpha-olefins, where the incidence of color, smell and imperfections (gels or "fish-eyes") in the resultant polymers is minimized.

The present invention also provides the application in the improved composition of a majority anti-static agent derived from a fatty acid sarcosinate and a minority anti-static agent comprising at least one poly-oxyethyl-alkyl amine used for the prevention and dissipation of electrostatic charges formed during the process of polymerization and copolymerization of the ethylene and alpha-olefins, in such way to improve optical and mechanical properties of the polymers generated in this process.

### DETAILED DESCRIPTION

In a general way, the present invention consists in an improved anti-static composition including two anti-static agents comprising, respectively, at least one fatty acid sarcosinate and at least one poly-oxyethyl-alkyl amine, and its application to the polymerization or copolymerization of the ethylene or alpha-olefins.

In the scope of the present report, the terms bellow have the following meaning:
- Gels or "fish-eyes": non-incorporated polymer particles, which show up when the resin is processed, for instance, to obtain polymer films. They are generated by polymer particles with high molecular weight, which are not incorporated under the standard processing conditions of the resin. They appear in the form of elliptical or round imperfections with the same color of the film. They vary a lot in size, from barely visible up to a diameter of 1.5 mm approximately. The film obtained, in the presence of gels or "fish-eyes", presents the tendency to rupture or tearing, which decrease the quality of the resin. The number of gels is determined by the analysis of film in an extrusion machine equipped with a laser sensor, which performs the automatic counting of the number of gels (defects).
- Color (to turn yellowish): it is the method used to the determination of color parameters in the Hunter scale, starting from plates made of polymer. This method is applied to all polymers obtained, in accordance with the standard ASTM E-313.
- Impact Resistance: It is the measure of the rigidity for a polymer determined in conformance with standards ASTM D256-00, ASTM D 4020 and ISO 11542-2.
- Alpha-olefin: are olefins of the type CH₂=CHR, where R is a radical of the type alkyl or aryl having from 1 to 10 carbon atoms.

The fatty acids can be obtained from natural vegetable supplies, like sunflower, corn, soybean, rice or olive oils, and also from animal fat. They have variable composition depending on the source, with higher or lower quantities of saturated fatty acids, among which the palmitic and the stearic, monounsaturated like the palmitoleic and the oleic or polyunsaturated like the linoleic and the linolenic.

The sarcosine is an amino acid of natural occurrence. It can be produced, for example, through the decomposition of caffeine in the presence of barium carbonate. The sarcosines are commercially obtained from the formaldehyde, from cyanides of alkali metals or alkaline-earth metals and from methylamine. The fatty acid sarcosinates can be easily obtained from a direct reaction between the sarcosinates of alkali metals or alkaline-earth metals and the fatty acid, in an alkaline environment.

The process of polymerization in suspension and specially the process for production of polyethylene and polypropylene, make use of anti-static agents or compositions intended for increasing the operability time of such process, avoiding frequent shutdowns for the cleaning and maintenance of polymerization reactors and heat exchangers.

The improved composition described and claimed by the present invention is used as an anti-static agent in the prevention and dissipation of electrostatic charges during the polymerization or copolymerization process of the ethylene or the alpha-olefins and, consequently, an improvement in the operational stability of the process, and gains in the quality of the resin obtained regarding the mechanical and optical properties. The combined use of a majority product derived from a fatty acid sarcosinate and at least one minority product selected among the poly-oxyethyl-alkyl amines presents synergies resulting in a composition having a very high anti-static power, which reflects positively in the polymerization process and in the final properties of the resin, and without showing significant depreciative effect on the activity of the catalytic system employed.

The improved composition of anti-static agents, in accordance with the present invention, comprises the following components:
a) A majority anti-static agent containing, in higher quantity, at least one salt of alkali metal or alkaline-earth metal of the N-oleoyl-sarcosine and, optionally, in lower quantity, at least one salt of alkali metal or alkaline-earth metal derived from other sarcosines presenting saturated or unsaturated carbon chains containing from 6 to 22 carbon atoms in the backbone;
b) A minority anti-static agent comprising at least one poly-oxyethyl-alkyl amine.

Preferably, the majority agent (a) consists of 60 to 98% in weight of at least one salt of alkali metal or alkaline-earth metal of the N-oleoyl-sarcosine and 2 to 40% in weight of at least one salt of alkali metal or alkaline-earth metal derived from other sarcosines, specially, sarcosines of linoleic, linolenic, palmitoleic, miristic, palmitic, stearic, araquidic, behenic and lignoceric acids. Among the alkali metals or alkaline-earth metals, those most suitable to be used in the composition of the majority anti-static agent (a) there is the sodium, the potassium, the magnesium and the calcium, this last one being preferred. The proportion of unsaponifiable contaminants present must be extremely low, between 0 and 1.2% in weight, preferably between 0 and 0.5%, allowing for the use without any restrictions in the polymerization or copolymerization process of the ethylene and alpha-olefins.

The adequate products to be used as minority anti-static agent (b) are the poly-oxyethyl-alkyl amines, particularly the diethanol amines of the general formula CH₃(CH₂)ₙN(CH₂CH₂-OH)₂, where n is greater than 2 and preferably is between 6 and 20. The minimum proportion of tertiary amines present must be 95%, which serves as an indicator of product purity, and a maximum water proportion of 5,000 ppm.

The improved composition of anti-static agents in accordance with the present invention may be obtained through the blend of the majority anti-static agent (a) and the minority anti-static agent (b) by several ways. The way used is not critical to the attaining of the final result. Among the possible options it may be mentioned as an example the prior physical blending of the agents (a) and (b), the dissolution of the two agents (a) and (b) in a appropriate solvent like mineral oil or saturated aliphatic solvents, thus obtaining a blend of the components, or else the dissolution of the component (a) in a appropriate solvent and the dissolution of the component (b) in another solvent and the addition of both to the polymerization process in the same point or in separated points.

In general, the anti-static composition of the present invention must be added to the polymerization medium in a proportion between 1 and 1,000 ppm in weight related to the mass of solvent used in the polymerization reaction, preferably between 2 and 500 ppm. The ideal composition of the anti-static agent of the present invention must be in the following range:
- 60 to 99% in weight of the majority anti-static agent (a), preferably between 64 and 97% in weight; and
- 1 to 40% in weight of the minority anti-static agent (b), preferably between 3 and 36% in weight.

As pointed out, the present invention is applied in the preparation of homopolymers of ethylene or alpha-olefins or copolymers of ethylene with alpha-olefins of the type CH₂=CHR, where R is the radical alkyl or aril containing from 1 to 10 carbon atoms. Examples of ethylene polymers are:
- linear low density polyethylene (LLDPE, having a density of less than 0.940 g/cm³) and linear very low and ultra low density polyethylene (LVLDPE and LULDPE, having a density less than 0.920 g/cm³ and reaching 0.860 g/cm³), consisting of copolymers of ethylene with one or more alpha-olefins containing 3 to 12 carbon atoms.
- High density polyethylene (HDPE, having a density between 0.940 and 0.955 g/cm³), including homopolymers of ethylene and copolymers of ethylene with alpha-olefins containing 3 to 12 carbon atoms;
- Ultra high molecular weight polyethylene (UHMWPE), having a density greater than 0.920 g/cm³),

Substances well fitted to the use as inert agents and as diluents in the present process include non-polar hydrocarbons containing between 3 and 50 carbon atoms, preferably between 3 and 20 carbon atoms. Specific examples are the aliphatic hydrocarbons, for instance, propane, isobutane, pentane, hexane, heptane, octane or liquid olefins; alicyclic hydrocarbons, like, for example, the cyclohexane. Preferably, propane, hexane, heptane, isoparafin or low molecular weight saturated oligomers are used.

The conditions used for polymerization include the conventional conditions well known in the state of the art for the polymerization in suspension, like for example, the temperatures of polymerization varying between 0 and 120 °C, preferably between 50 and 110 °C, under conditions of monomer pressure between the atmospheric pressure and up to 500 atmospheres, preferably between 1 and 200 atmospheres, in the absence of water, oxygen and in most cases, in the presence of a molecular weight regulator, like for example the hydrogen.

The polymerization may be performed in different types of reactors, in a continuous way or in batches. The catalyst of polymerization may be any conventional catalyst for the polymerization of olefins. For instance, when two or more olefins, like the ethene and the butene, are copolymerized, Phillips or Ziegler-Natta catalysts can be employed. Phillips catalysts appropriated for the use in the present process include the catalysts of Chromium (VI) oxide supported on refractory oxides like silica, silica-alumina and alumina. Ziegler-Natta catalysts are composed by metals of the group 4, 5 or 6 of the periodic table containing at least one metal-halogen bond, supported on active Mg-dihalide or silica. The catalytic system employed consists in the contact of the mentioned catalyst with a compound of alkyl-aluminum, comprising an organometalic compound of groups 1, 2, 12 and 13 of the periodic table. Specific examples of these compounds are the trimethylaluminum (TMA), triethylaluminum (TEA1), triisobutylaluminum (TIBAI), methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), tri-n-hexyl aluminum (Tn-HA1), tri-n-octyl aluminum (Tn-OAI) and dimethylaluminum chloride (DMAC). They can be used in concentrated form or, preferably, diluted in an organic solvent chosen from the aliphatic hydrocarbons.

As the main advantage, as a consequence of the present invention, we have as a result the decrease in the consumption of the anti-static composition, when compared to the consumptions of anti-static agents in other processes known nowadays, as a function of the better performance of the used combination. It is possible to prevent the deposition and adhesion of polymer particles in the inner walls of reactors, stirrers and heat exchangers when the polymerization or copolymerization of the ethylene or alpha-olefins in suspension is performed, preventing the loss of heat exchanging capability, and allowing for the polymerization reaction to be carried under stable conditions, for a long period of time. By preventing against the formation of agglomerates and deposits, and against the mixing of these with the polymer formed in the process, it was possible to improve the quality of the obtained resins regarding the optical and mechanical properties, showing smaller amount of imperfections (gels or "fish-eyes"), less prominent color (become yellowish) and higher resistance to impact. It was also observed higher activity and efficiency of the catalytic system, lower contamination of solvent with mercaptanes, economy of organometallic compounds of aluminum and better response to hydrogen.

After the description of the present invention, better understanding can be achieved by the evaluation of the subsequent examples, which are depicted here for merely illustrative purposes and are not restrictive, being allowed another means by which the invention may be materialized.

### EXAMPLES

In order to achieve a better understanding of the present invention, examples regarding the tests that depict the present invention are shown below, as well as the comparative examples.

### EXAMPLES FROM 1 - 7

The following examples are related to some tests performed to evaluate the effectiveness of several compounds as anti-static agents, and its influence over the activity of the catalytic system, in the process of the present invention.

In a 3.5 L steel reactor equipped with a cooling jacket and mechanical stirrer, spinning at 300 revolutions per minute and kept at 75 °C, there were introduced in a nitrogen atmosphere, successively, 1.800 mL of n-hexane, the catalytic complex, consisting of TiCl₄ supported on MgCl₂ and triethylaluminum , in a proportion Al/Ti = 300, suspended in 100 ml of hexane or isoparafin and the anti-static agent, dissolved in hexane or isoparafin. After temperature stabilization in the test conditions, the reaction was started by adding 7 bar of ethylene. Ethylene pressure was kept constant through the reaction time, being the consumed ethylene replaced through a flow control device connected to a vessel of pressurized ethylene. The reaction time was 2 hours.

The result of these tests is summarized in the table I below. Results clearly show that the increase in the dosage of poly-oxyethyl-alkyl amines as anti-static agent in the polymerization reaction, has a pronounced deleterious action over the activity of catalytic system.

**Table 1: polymerization reactions in bench scale, to the evaluation of the activity of the catalytic system in the presence of anti-static agents.**

| Test number | Combination of antistatic agents | Quantity of antistatic agent added | Catalyst | Polymer mass | Productivity |
|---|---|---|---|---|---|
| | (1:2)^{(a)} | (ppm)^{(b)} | (mg) | (g) | (kg of polymer/g of catalyst) |
| I | 0:0 | 0 | 20.3 | 465.94 | 22.95 |
| II | 0:1 | 100 | 21.9 | 289.59 | 13.22 |
| III | 0:1 | 300 | 22 | 32.13 | 1.46 |
| IV | 0:1 | 500 | 23 | 0 | 0 |
| V | 9:1 | 100 | 20.3 | 406.56 | 20.03 |
| VI | 9:1 | 300 | 19.8 | 268.63 | 13.57 |
| VII | 9:1 | 500 | 20.9 | 132.63 | 6.34 |

| | | | | | |
|---|---|---|---|---|---|
| (a) Ratio in weight between the quantities of anti-static agents: (1) Calcium sarcosinate (composition: 30% of the active agent, 40% of isoparafin and 30% of naphtha), Kerostat CE 50099; and (2) poly-oxyethyl-alkylamine (100%), Atmer 163®. (b) Mass ratio w/w in relation to the mass of solvent used in the reaction. | | | | | |

The addition of 100 ppm (test number II) of poly-ethoxy-alkyl amine in the reaction medium causes a decrease in the activity of the catalyst of approximately 50%, when compared to the activity obtained in the reaction where the anti-static agent was not used (Test number I). The addition of 300 ppm causes an almost complete poisoning of the catalytic species, which shows no noticeable activity (Test number III).

It can be also confirmed that the consumption of the improved composition of anti-static agents based on 90% of the majority anti-static agent and 10% of the minority anti-static agent have an effect a lot less pronounced over the activity of the catalytic system, comparing the same dosage levels (compare tests II and V and tests III and VI).

### EXAMPLE 8

This test was performed in a pilot plant operating in continuous mode for the production of UHMWPE. A catalytic system prepared in accordance with examples from 1-8 of the patent PI 9203645-7 was used. The catalyst was pre-polymerized in a ratio of 1: 1 in mass. The operational conditions are depicted in the following table.

The ethylene was polymerized in a continuous form in a polymerization reactor, using hexane as solvent, in the presence of the catalytic system aforementioned and using diethylaluminum chloride (DEAC) as cocatalyst.

| Main operational conditions | |
|---|---|
| Catalyst [ppm] | 10-11 |
| Temperature [°C] | 70 |
| Residence time | 1.1 - 1.2 |
| H2/Ethene (molar %) | 0.3 - 0.5 |
| Comonomer (molar %) | 0.5 - 1.0 |
| Pressure [kgf/cm2] | 5 |
| Alkyl aluminum [TYPE] | DEAC |
| Alkyl aluminum [ppm] | 75 - 80 |
| Activity [kgPE/g CAT] | 12 |
| Resin properties color | -2.6 to -2.7 |
| Density | 0.921 - 0.922 |

A combination of 90% of the majority anti-static agent and 10% of the minority anti-static agent, dissolved in isoparafin, was added to the polymerization reaction. The reference composition used as majority anti-static agent was the product Kerostat CE5009®. The reference composition used as minority anti-static agent was the product ATMER 163®. The feeding of the anti-static combination was adjusted to 115-125 mg/l of hexane. As a result, ultra high molecular weight polyethylene was obtained from the reactor at a rate of 120 kg/h. The activity of the catalytic system was 12 kg/g.

In accordance with this operational procedure, normal and stable operational conditions could be developed during 28 days. After the shutdown of the unit for an inspection, a careful examination showed that the deposition of polymer in the walls of the reactor and heat exchangers was negligible. The polyethylene produced throughout this period showed an high homogeneity degree and low variation in the properties of the resin.

### REFERENCE 1, COMPARATIVE TO THE EXAMPLE 8

The same process described in the example 8 was used, in the same operational conditions, except that only the anti-static agent based on the calcium sarcosinate (composition: 30% of the active agent, 40% of isoparafin and 30% of naphtha) was added to the polymerization process. A gradual loss of reactivity was observed. An obstruction of the centrifugal device occurred after 82 h of operation and the unit had to be stopped. After the inspection it was verified a large quantity of clots and agglomerates in the reactor.

### REFERENCE 2, COMPARATIVE TO THE EXAMPLE 8

The same process described in the example 8 was used, in the same operational conditions, except that only the anti-static agent based on the poly-ethoxy-alkyl amine was added to the polymerization process. A marked reduction of catalytic system activity was observed, and difficulty in controlling the reaction. The process had to be interrupted after 8h and 30 min of operation due to the increase in reaction temperature, loss of efficiency in heat exchange and obstruction of the reactor.

### REFERENCE 3, COMPARATIVE TO THE EXAMPLE 8

The same process described in the example 8 was used, in the same operational conditions, except that no anti-static agent was added to the polymerization process. Large quantities of the polymer remained adhered to the wall of the reactor and the heat exchanger, and a gradual loss of both thermal conductivity and thermal transference capability of the system were observed. All activities had to be suspended after 48h of operation.

### REFERENCE 4, COMPARATIVE TO THE EXAMPLE 8

The same process described in the example 8 was used, in the same operational conditions, except that one anti-static agent based on one polysulphone (composition: 60% of kerosene, 20% of toluene, 8% of dodecylbenzene sulphonic acid and 12% of polysulphone) was added to the polymerization process in a concentration of 230-250 mg/l of hexane. The composition in question is the product STADIS 450®. A marked reduction of catalytic system activity was observed, from 12 to 4 kg/g. Plant operation was normal, in these process conditions, for 91 h.

### REFERENCE 5, COMPARATIVE TO THE EXAMPLE 8

The same process described in the example 8 was used, in the same operational conditions, except that one anti-static agent based on one polysulphone (composition: 60% of kerosene, 20% of toluene, 8% of dodecylbenzene sulphonic acid and 12% of polysulphone) was added to the polymerization process in a concentration of 115-125 mg/l of hexane. An improvement of catalytic system activity was observed, when compared to the activity obtained in reference 4, which raised from 4 to 7 kg/g. Although, the formation of clots inside the polymerization reactor and the heat exchanger occurred after 48h of operation, prompting a complete shutdown of the unit. A complete obstruction of the heat exchanger was verified, due to the accumulation of polymer.

### EXAMPLE 9

The same process described in the example 8 was used, except that the molar percentage of the monomer used in the polymerization reaction was of 0.1-0.2%. In accordance with this operational procedure, normal and stable operational conditions could be developed during more than 28 days.

| | | |
|---|---|---|
| Resin properties | Color | -2.6 to -2.7 |
| Apparent Density | | 0.40 - 0.41 |
| Resistance to Impact | Charpy | 122.1 |
| Intrinsic Viscosity | | 19.5 - 20.5 |

After the shutdown of the unit for an inspection, a careful examination showed that the deposition of polymer in the walls of the reactor and heat exchangers was negligible. The polyethylene produced throughout this period showed high homogeneity degree and low variation in the properties of the resin.

### EXAMPLE 10

This test was performed in a pilot plant operating in continuous mode for the production of HDPE. A catalytic system prepared in accordance with examples from 1-8 of the patent PI 9203645-7 A was used. The catalyst was pre-polymerized in a ratio of 1:1 in mass. The operational conditions are depicted in the following table.

The ethylene was polymerized in a continuous form in a polymerization reactor, using hexane as solvent, in the presence of the catalytic system aforementioned and using diethylaluminum chloride (DEAC) and triethylaluminum (TEA1) as cocatalyst.

| Main operational conditions | | |
|---|---|---|
| Temperature | °C | 90 |
| Pressure | kgf/cm2 | 10.0 - 19.0 |
| Residence time | h | 1.4 - 1.6 |
| H2/Ety ratio | molar % | 100 - 150 |
| Bty/Ety ratio | molar % | 0 |
| Catalyst | ppm | 3 - 12 |
| Alkyl Aluminum | - | DEAC/TEA1 (59:1) |
| Alkyl Aluminum | ppm | 60 |

The improved composition of anti-static agents of Example 8 was added to the polymerization reaction. The feeding of the anti-static combination was adjusted to 35-45 mg/l of hexane. As a result, high density polyethylene was obtained from the reactor at a rate of 120 kg/h. The activity of the catalytic system was 15 kg/g.

In accordance with this operational procedure, normal and stable operational conditions could be developed during 28 days. After the shutdown of the unit for an inspection, a careful examination showed that the deposition of polymer in the walls of the reactor and heat exchangers was negligible. The polyethylene produced throughout this period showed high homogeneity degree and low variation in the properties of the resin. When the polymer was extruded to obtain the film, an almost complete absence of imperfections was observed (no gels or "fish-eyes").

### EXAMPLE 11

The same process described in Example 10 was used. The operational conditions are depicted in the following table.

The ethylene was polymerized in a continuous form in a polymerization reactor, using hexane as solvent, in the presence of the catalytic system aforementioned and using diethylaluminum chloride (DEAC) and triethylaluminum (TEA1) as cocatalyst. The improved composition of anti-static agents of Example 8 was added to the polymerization reaction. The feeding of the anti-static combination was adjusted to 35-45 mg/l of hexane. As a result, high density polyethylene was obtained from the reactor at a rate of 120 kg/h. The activity of the catalytic system was 18 kg/g.

| Main operational conditions | | |
|---|---|---|
| Temperature | °C | 80 |
| Pressure | kgf/cm2 | 3.0 - 12.0 |
| Residence time | h | 0.9 - 1.2 |
| H2/Ety ratio | molar % | 15 - 25 |
| Bty/Ety ratio | molar % | 2.0 - 3.5 |
| Cat/NHX | ppm | 3.0 - 12.0 |
| Alkyl Aluminum | - | DEAC/TEA1 (59:1) |
| Alkyl Aluminum | ppm | 60 |
| Comonomer | kg/h | 2.0 - 4.0 |

In accordance with this operational procedure, normal and stable operational conditions could be developed during 28 days. After the shutdown of the unit for an inspection, a careful examination showed that the deposition of polymer in the walls of the reactor and heat exchangers was negligible.

The polyethylene produced throughout this period showed high homogeneity degree and low variation in the properties of the resin. When the polymer was extruded to obtain the film, an almost complete absence of imperfections was observed (no gels or "fish-eyes").

### EXEMPLE 12

A water solution of chromium trioxide was adsorbed on silica. The impregnated support was dried during 6h at 120 °C, in a nitrogen atmosphere, and then activated at 780 °C during 4h, generating a supported catalyst of silica-chromium oxide containing 1% of chromium. Using this catalyst, ethylene was polymerized in a continuous way at 90 °C, under a total pressure of 15-18 kg/cm2. The feeding of the catalyst was adjusted between 8-20 mg/l. Additionally, the improved composition of anti-static agents of Example 8 was added to the reactor. The feeding of the anti-static combination was adjusted at 13-20 mg/l of hexane. As a result, high density polyethylene was obtained from the reactor at a rate of 120 kg/h. The activity of the catalytic system was 3 kg/g.

In accordance with this operational procedure, normal and stable operational conditions could be developed during 28 days. After the shutdown of the unit for an inspection, a careful examination showed that the deposition of polymer in the walls of the reactor and heat exchangers was negligible. The polyethylene produced throughout this period showed high homogeneity degree and low variation in the properties of the resin. When the polymer was extruded to obtain the film, an almost complete absence of imperfections (gels or "fish-eyes") was observed.

### REFERENCE 6, COMPARATIVE TO EXAMPLES 9, 10, 11 AND 12

The same reaction conditions of examples 9, 10, 11 and 12 were tested in the pilot plant, except that no anti-static agent was added to the polymerization reaction. System operation is unstable and gradual loss of thermal exchange of heat exchangers is observed. The conduction of the process was not possible for more than two consecutive days. When polymer samples obtained in these reactions were extruded in films, large quantity of contaminants was observed, which virtually made the polymer unusable for any practical use.

## Claims

1. Anti-static composition useful in the polymerization or copolymerization of olefins in suspension, **characterized in that** it comprises a combination of the following components:
- one majority anti-static agent comprising at least one fatty acid sarcosinate; and
- one minority anti-static agent comprising at least one poly-oxyethyl-alkyl amine.

2. Anti-static composition, in accordance with claim 1, **characterized in that** the majority anti-static agent (a) comprises at least one salt of alkali or alkaline earth metal derived from N-oleoyl-sarcosine.

3. Anti-static composition, in accordance with claim 2, **characterized in that** the majority anti-static agent (a) comprises, in larger quantity, at least one salt of alkali or alkaline earth metal of the N-oleoyl-sarcosine and, in smaller quantity, at least one salt of alkali or alkaline earth metal of other sarcosines presenting saturated or unsaturated carbon chains containing from 6 to 22 carbon atoms in the backbone.

4. Anti-static composition, in accordance with claim 3, **characterized in that** the majority anti-static agent (a) comprises 60 to 98% in weight of at least one salt of alkali or alkaline earth metal of N-oleoyl-sarcosine and, 2 to 40% in weight of at least one salt of alkali or alkaline earth metal derived from other sarcosines .

5. Anti-static composition, in accordance with claim 3 or 4, **characterized in that** the majority anti-static agent (a) comprises, in addition to the salt derived from the N-oleoyl-sarcosine, one or more among the sarcosines of linoleic, linolenic, palmitoleic, miristic, palmitic, stearic, araquidic, behenic and lignoceric acids.

6. Anti-static composition, in accordance with any of claims 1 to 5, **characterized in that** the proportion of unsaponifiable contaminants present in the majority anti-static agent (a) varies between 0 and 1.2% in weight.

7. Anti-static composition, in accordance with claim 6, **characterized in that** the proportion of unsaponifiable contaminants varies between 0 and 0.5% in weight.

8. Anti-static composition, in accordance with any of claims 1 to 7, **characterized in that** the products adequate to be used as minority anti-static agent (b) comprise the diethanolamines of the general form CH₃(CH₂)ₙN(CH₂CH₂-OH)₂, where n is greater than 2.

9. Anti-static composition, in accordance with claim 8, **characterized in that** n is between 6 and 20.

10. Anti-static composition, in accordance with claim 8 or 9, **characterized in that** the minimum proportion of tertiary amines present must be 95% and a maximum water proportion of 5,000 ppm.

11. Anti-static composition, in accordance with any of claims 1 to 10, **characterized in that** it comprises 60 to 99% in weight of the majority anti-static agent (a) and 1 to 40% in weight of the minority anti-static agent (b).

12. Anti-static composition, in accordance with claim 11, **characterized in that** it comprises from 64 to 97% in weight of the majority anti-static agent (a) and 3 to 36% in weight of the minority anti-static agent (b).

13. Anti-static composition, in accordance with any of claims 1 to 12, **characterized in that** it is obtained by the prior physical blending of the agents (a) and (b), or by the dissolution of the two agents (a) and (b) in a appropriate solvent like mineral oil or saturated aliphatic solvents, thus obtaining a blend of the components, or else the dissolution of the component (a) in a appropriate solvent and the dissolution of the component (b) in another solvent and the addition of both to the polymerization process in the same point or in separated points.

14. Anti-static composition, in accordance with any of claims 1 to 13, **characterized in that** it prevents and dissipates electrostatic charges formed during the polymerization or copolymerization process of the ethylene or alpha-olefins.

15. Process of polymerization or copolimerization of olefins in suspension, **characterized in that** it comprises the employment of the anti-static composition as depicted in any of claims 1 to 14.

16. Process, in accordance with claim 1 S, **characterized in that** the anti-static composition is added to the polymerization medium at a proportion between 1 and 1,000 ppm in weight in relation to the mass of solvent used in the polymerization reaction.

17. Process, in accordance with claim 15, **characterized in that** the anti-static composition is added at a proportion between 2 and 500 ppm.

18. Process, in accordance with any of claims 15 to 17, **characterized in that** the activity of the catalytic system, employed in the polymerization reaction, is unharmed.

19. Process, in accordance with any of claims 15 to 18, **characterized in that** the consumption of activators and alkyl aluminum compounds is substantially reduced.

20. Process, in accordance with any of claims 15 to 19, **characterized in that** it results in the preparation of homopolymers of ethylene or alpha-olefins or copolymers of ethylene with alpha-olefins of the type CH₂=CHR, where R is alkyl or aryl radical containing 1 to 10 carbon atoms.

21. Process, in accordance with any of claims 15 to 20, **characterized in that** ethylene polymers could be: linear low density polyethylene (LLDPE, having a density less than 0.940 g/cm³) and linear very low and ultra low density polyethylene (LVLDPE and LULDPE, having a density less than 0.920 g/cm³ and reaching 0.860 g/cm³), consisting of copolymers of ethylene with one or more alpha-olefins containing 3 to 12 carbon atoms; or, High density polyethylene (HDPE, having a density between 0.940 and 0.955 g/cm³), including homopolymers of ethylene and copolymers of ethylene with alpha-olefins containing 3 to 12 carbon atoms; or, Ultra high molecular weight polyethylene (UHMWPE), having a density greater than 0.920 g/cm³);

22. Process, in accordance with any of claims 15 to 21, **characterized in that** the substances appropriated to the use as inert agent and as diluents in the present process include non-polar hydrocarbons containing between 3 and 50 carbon atoms.

23. Process, in accordance with claim 22, **characterized in that** the non-polar hydrocarbons contain between 3 and 20 carbon atoms.

24. Process, in accordance with claim 23, **characterized in that** the hydrocarbon is an aliphatic hydrocarbon, such as the propane, the isobutane, the pentane, the hexane, the heptane, the octane or liquid olefins.

25. Process, in accordance with claim 23, **characterized in that** the hydrocarbon is an alicyclic hydrocarbon, such as the cyclohexane.

26. Process, in accordance with any of claims 15 to 25, **characterized in that** the conditions of polymerization use polymerization temperatures varying between 0 and 120 °C under conditions of monomer pressure between the atmospheric pressure up to 500 atmospheres, in the absence of water, oxygen and in most cases, in the presence of a molecular weight regulator.

27. Process, in accordance with any of claims 15 to 26, **characterized in that** the polymerization can be performed in different types of reactors, in a continuous way or in batches.

28. Process, in accordance with any of claims 15 to 27, **characterized in that** the polymerization catalyst can be any conventional catalyst for olefin polymerization.

29. Process, in accordance with any of claims 15 to 28, **characterized in that** it can employ catalysts Phillips or Ziegler-Natta catalysts when two or more olefins are copolymerized.

30. Process, in accordance with any of claims 15 to 29, **characterized in that** the Phillips catalysts appropriated to the use include the catalysts of Chrome(VI) oxide supported on refractory oxides like silica, silica-alumina and alumina.

31. Process, in accordance with any of claims 15 to 30, **characterized in that** the Ziegler-Natta catalysts are composed by metals of the group 4, 5 or 6 of the periodic table containing, at least, one metal-halogen bond, supported on active Mg-dihalide or silica.

32. Process, in accordance with any of claims 15 to 31, **characterized in that** the catalytic system employed consists in the contact of the mentioned catalyst with a compound of alkyl-aluminum, comprising an organometalic compound of groups 1, 2, 12 and 13 of the periodic table.

33. Process, in accordance with any of claims 15 to 32, **characterized in that** the compound of alkyl-aluminum can be trimethylaluminum (TMA), triethylaluminum (TEA1), triisobutylaluminum (TIBA1), methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), tri-n-hexyl aluminum (Tn-HA1), tri-n-octyl aluminum (Tn-OAI) and dimethylaluminum chloride (DMAC), and can be used in concentrated or, preferably, diluted in an organic solvent chosen from the aliphatic hydrocarbons.

34. Olefin polymer or copolymer, **characterized in that** it is obtained by the process as described in any of claims 15 to 33.

35. Olefin polymer or copolymer, in accordance with claim 34, **characterized in that** it presents improved optical and mechanical properties.

36. Olefin polymer or copolymer, in accordance with claim 34 or 35, **characterized in that** it presents minimized adherence to the walls of reactors, stirrers and heat exchangers.

37. Olefin polymer or copolymer, in accordance with claim 34 to 36, **characterized in that** the incidence of color, smell and imperfections (gels or "fish-eyes") is minimized in the polymer obtained in this process.
